# EUROPÄISCHE PATENTSCHRIFT

(11) **EP 2 718 005 B1**
(45) Veröffentlichungstag und Bekanntmachung des Hinweises auf die Patenterteilung: **23.08.2017**
(21) Anmeldenummer: 12730410.3
(22) Anmeldetag: 06.06.2012
(51) Int. Cl.: B01J 19/12, C08G 18/00, C08F 2/46

(54) **VERFAHREN ZUR POLYMERISIERUNG VON MONOMER- UND/ODER OLIGOMEREINHEITEN DURCH INFRAROTLICHTIMPULSE**
METHOD FOR POLYMERIZING MONOMER UNITS AND/OR OLIGOMER UNITS BY MEANS OF INFRARED LIGHT PULSES
PROCÉDÉ DE POLYMÉRISATION DE MOTIFS MONOMÈRES ET/OU OLIGOMÈRES AU MOYEN D'IMPULSIONS DE LUMIÈRE INFRAROUGE

(30) Priorität: 07.06.2011 DE 102011050894
(43) Veröffentlichungstag der Anmeldung: 16.04.2014
(73) Patentinhaber: Freie Universität Berlin, 14195 Berlin (DE)
(72) Erfinder: HEYNE, Karsten, 14979 Großbeeren (DE); HEYNE, Anja, 14979 Großbeeren (DE)
(74) Vertreter: Maikowski & Ninnemann Patentanwälte Partnerschaft mbB
(86) Internationale Anmeldenummer: PCT/EP2012/060705
(87) Internationale Veröffentlichungsnummer: WO 2012/168302

(56) Entgegenhaltungen:
- EP-A1- 2 000 200
- WO-A1-2009/076267
- DE-A1- 10 136 683
- GREGOR KNÖNER, JULIEN HIGUET, SIMON PARKIN, TIMO A. NIEMINEN, NORMAN R. H ECKENBERG, ANDHALINA RUBINSZTEIN-DUNLOP: "Two-photon Polymerization Process for Optically Driven Micromachines", SPIE, PO BOX 10 BELLINGHAM WA 98227-0010 USA, Bd. 6038, Nr. 603810-10 (2006), 2006, XP040216609,

## Beschreibung

Die Erfindung betrifft ein Verfahren zur Polymerisierung von Monomer- und/oder Oligomereinheiten gemäß dem Oberbegriff des Anspruchs 1 sowie die Verwendung von Infrarotlichtimpulsen gemäß dem Oberbegriff des Anspruchs 14.

Aus der WO 2006/069448 A2 ist ein Verfahren zur Abtragung von Material mittels Infrarotlicht-Laserimpulsen bekannt, bei dem die Energie des Infrarotlichtes in Wärmenergie des abzutragenden Materials umgewandelt wird. Dabei werden innerhalb des abzutragenden Materials überhitzte Stellen erzeugt, in denen die Temperatur über dem Verdampfungspunkt zumindest einer Komponente des abzutragenden Materials liegt.

Aus der WO 2007/082861 A1 ist ein Verfahren zur Synthese von Produktmolekülen bekannt, bei denen durch Laserimpulse aus sichtbarem Licht Energie in zu reagierende Eduktmoleküle eingebracht wird, wobei die Reaktion der Eduktmoleküle zu Produktmolekülen auf einer Oberfläche stattfindet, an der die Eduktmoleküle zumindest teilweise adsorbiert werden.

Der vorliegenden Erfindung liegt die Aufgabe zugrunde, ein Verfahren bereitzustellen, bei dem eine Polymerisation von Monomer- und/oder Oligomereinheiten zu Polymereinheiten im Wesentlichen ohne Temperaturerhöhung des zu polymerisierenden Materials bewerkstelligt wird. Ferner liegt der Erfindung die Aufgabe zugrunde, eine neue Verwendungsmöglichkeit für Infrarotlichtimpulse anzugeben.

Diese Aufgabe wird mit den Merkmalen der unabhängigen Ansprüche 1 und 14 gelöst.

Die Erfindung beruht auf der grundlegenden Idee, keine Wärme mittels Infrarotlichtimpulsen in ein zu reagierendes System einzubringen, sondern gezielt Bindungen innerhalb der zu reagierenden Moleküle anzuregen, um so das Aufbrechen dieser Bindungen und die Neuverknüpfung von an den Bindungen zuvor beteiligten Atomen zu ermöglichen. Alternativ oder zusätzlich lassen sich so auch Radikale erzeugen. Auf diese Weise lassen sich Vernetzungsreaktionen initiieren, gezielt steuern und räumlich anordnen. Die erfindungsgemäß durchzuführenden Polymerisationen können dabei beispielsweise auch Polykondensations- oder Polyadditionsreaktionen sein.

Zur Lösung der Aufgabe wird in einem Verfahren zur Polymerisierung von Monomer-und/oder Oligomereinheiten zu Polymereinheiten die zur Polymerisierung benötigte Energie durch Infrarotlichtimpulse bereitgestellt. Die Infrarotlichtimpulse weisen dabei eine Wellenlänge von 2500 bis 20000 nm, eine Intensität von mehr als 10¹⁴ W/m², eine Dauer von mehr als 8 Femtosekunden (fs) und weniger als 3 Pikosekunden (ps) und eine im Wesentlichen (das heißt überwiegend) lineare Polarisation auf. Mittels derartiger Infrarotlichtimpulse ist sichergestellt, dass im Wesentlichen keine Erwärmung der zu reagierenden Moleküle erfolgt, da die Pulsdauern der Infrarotlichtimpulse hierfür zu kurz sind. So werden mit Infrarotlichtimpulsen mit einer Dauer von weniger als 3 ps, insbesondere weniger als 1 ps und ganz besonders weniger als 500 fs intra- und intermolekulare Energieumverteilungen vermieden, die zur thermischen Aufheizung des Moleküls führen könnten. Andererseits muss eine ausreichend hohe Energie in die zu reagierenden Moleküle eingebracht werden, weshalb Pulsdauern von mehr als 8 fs, insbesondere mehr als 10 fs, insbesondere mehr als 50 fs und ganz besonders mehr als 100 fs notwendig sind.

Damit innerhalb dieser kurzen Zeitdauern eine ausreichende Energieintensität in die zu reagierenden Moleküle eingebracht werden kann, ist es erforderlich, dass die Intensität der Infrarotlichtimpulse größer als 10¹⁴ W/m², insbesondere größer als 10¹⁵ W/m², insbesondere größer als 10¹⁶ W/m² und ganz besonders größer als 10¹⁷ W/m² ist. Da solch hohe Intensitäten derzeit nur mit Lasern erzeugt werden können, wird als Infrarotlichtquelle zweckmäßigerweise ein Infrarotlichtlaser eingesetzt.

Die Infrarotlichtimpulse weisen ferner eine überwiegend lineare Polarisation auf, deren Richtung geändert werden kann. Da die Infrarot-Lichtabsorption durch die Vektorrichtung der Schwingungsübergangsdipolmomente (tdm) gegeben ist, werden hauptsächlich Monomer-und Oligomereinheiten Infrarotlicht absorbieren, deren Schwingungsübergangsdipolmoment parallel zur Infrarotlaserlicht-Polarisationsrichtung ausgerichtet ist. Dadurch kann die Richtung, entlang derer die Polymerisierung stattfindet, mit der Infrarotlaserlichtpolarisation vorgegeben und geändert werden. Dadurch können Polymere mit deutlich unterschiedlichen Eigenschaften entlang verschiedener Raumrichtungen erzeugt werden, was durch Erhitzen nicht gelingt, da dies ein weitgehend isotroper Prozess ist. Eine mögliche Anwendung hierfür ist es, die Elastizität eines Polymers entlang einer ersten Richtung sehr hoch und entlang einer zweiten Richtung, die insbesondere senkrecht zur ersten Richtung verläuft, sehr niedrig einzustellen.

Um eine optimale Anregung der Schwingungen im Molekül zu erreichen, weisen die Infrarotlichtimpulse vorzugsweise zusätzlich einen negativen Chirp auf. Unter dem fachsprachlichen Begriff "Chirp" wird die Eigenschaft eines Lichtimpulses verstanden, dass sich seine Frequenz über die Dauer des Lichtimpulses ändert. Gemäß dem Modell des anharmonischen Oszillators weisen die verschiedenen angeregten Zustände einer Schwingung umso geringere Abstände zueinander auf, je höher die Schwingungsniveaus liegen. Das heißt, die zur Überführung einer Schwingung von einem hohen Schwingungsniveau in ein noch höheres Schwingungsniveau benötigte Energie ist geringer als die Energie, die zur Überführung einer Schwingung aus dem Grundzustand in das erste höhere Schwingungsniveau erforderlich ist. Ein Infrarotlichtimpuls mit einem negativen Chirp trägt dieser Tatsache dahingehend Rechnung, dass die Frequenz mit der Zeit abnimmt, so dass die durch den Infrarotlichtimpuls bereitgestellte Energie ebenfalls mit der Zeit abnimmt. Das heißt, der Infrarotlichtgrundpuls weist zunächst hochenergetische und im späteren Verlauf niederenergetische Frequenzen auf. Folglich ist der Infrarotlichtimpuls an die anzuregenden Schwingungsniveaus bestens angepasst, so dass ein optimaler Energietransfer stattfinden kann.

Gechirpte Infrarotlichtimpulse können beispielsweise mit einem deformierbaren Spiegel erzeugt werden oder mit dem passiven Infrarotlicht-Pulsformer, der in der internationalen Patentanmeldung WO 2009/135870 A1 beschrieben ist.

In einer Variante werden linear negativ gechirpte Infrarotlichtimpulse verwendet. Das bedeutet, dass die Frequenz dieser Infrarotlichtimpulse linear über die gesamte Pulsdauer abnimmt; dies kommt dem Modell des anharmonischen Oszillators besonders nahe und ermöglicht einen besonders vorteilhaften Energieeintrag in die zu reagierenden Moleküle.

Die Wellenlänge der Infrarotlichtimpulse ist mit 2500 bis 20000 nm (4000 cm⁻¹ bis 500 cm⁻¹) derart gewählt, dass zahlreiche Schwingungen der Bindungen, die für eine Polymerisationsreaktion geöffnet und neu verknüpft werden sollen, angeregt werden können. Bevorzugte Wellenlängenbereiche erstrecken sich von ca. 3000 nm bis ca. 15000 nm, von ca. 4000 nm bis ca. 10000 nm oder von ca. 5000 nm bis ca. 8000 nm.

In einer Variante des Verfahrens weisen die Infrarotlichtimpulse zusätzlich eine Polarisation auf. Dadurch ist es möglich, bestimmte Bindungen, deren Schwingungsvektoren entlang der Polarisationsrichtung des Infrarotlichtes ausgerichtet sind, anzuregen. Zwar kommt es, insbesondere wenn in flüssigen Systemen gearbeitet wird, durch Diffusion zu Neuanordnungen der zu reagierenden Moleküle, doch treten diese Effekte aufgrund der sehr kurzen Dauer der eingesetzten Infrarotlichtimpulse in den Hintergrund. Folglich ist es möglich, durch den Einsatz polarisierter Infrarotlichtimpulse eine Polymerisierungsvorzugsrichtung innerhalb des zu bildenden Polymers einzustellen. Auf diese Weise kann eine gezielte Vernetzung mit kontrollierter Quervernetzung des zu erzeugenden Polymers erreicht werden.

Um eine gute Anpassung an die anzuregenden Schwingungen zu ermöglichen, überstreicht jeder Infrarotlichtimpuls in einer Variante einen spektralen Bereich von ca. 2 bis ca. 1000 cm⁻¹. Durch die Ausnutzung eines derartigen spektralen Bereichs können auch Schwingungen wirksam angeregt werden, die im Absorptionsspektrum eine breite Bande aufweisen. Weitere geeignete spektrale Bereiche, die jeder Infrarotlichtimpuls während seiner Lebensdauer überstreicht, sind die Bereiche von rund 100 bis 900 cm⁻¹, insbesondere von ca. 200 bis 800 cm⁻¹, insbesondere von ca. 300 bis 700 cm⁻¹ und ganz besonders von ca. 400 bis 600 cm⁻¹.

Um eine ausreichend große Anzahl von Monomer- und/oder Oligomereinheiten zur Polymerisation zu bringen und folglich ein ausreichend großvolumiges Polymer herstellen zu können, beträgt die Repetitionsrate der Infrarotlichtimpulse zwischen 0,5 kHz und 200 MHz. Auf diese Weise lassen sich auch in überschaubaren Zeiten verhältnismäßig großvolumige Polymerkörper erzeugen. Weiter geeignete untere Grenzen für die Repetitionsrate liegen bei etwa 1 kHz, etwa 10 kHz, etwa 100 kHz und etwa 1 MHz. Weiter geeignete obere Grenzen für die Repetitionsrate liegen bei etwa 10 MHz, 50 MHz, 80 MHz, 100 MHz, 150 MHz und 170 MHz.

Um beispielsweise einen größeren Spektralbereich gleichzeitig abdecken zu können und auf diese Weise verschiedene Bindungen gleichzeitig brechen zu können, werden in einer Variante des Verfahrens mehrere überlagerte Infrarotlichtimpulse verwendet, die sich jeweils voneinander in mindestens einem Parameter unterscheiden. Dieser Parameter kann beispielsweise der Spektralbereich und/oder die Polarisation der Infrarotlichtimpulse sein. Bei noch ausreichender Intensität der einzelnen Infrarotlichtimpulse kann das Polymerisationsverfahren auf diese Weise signifikant beschleunigt werden, da das Aufbrechen und Neuverknüpfen einzelner chemischer Bindungen dann nicht nur seriell, sondern auch parallel durchgeführt werden kann.

Die Erzeugung der mehreren überlagerten Infrarotlichtimpulse kann in einer Variante beispielsweise durch mindestens einen optisch-parametrischen Verstärker erfolgen. Derartige optisch-parametrische Verstärker sind geeignet, sowohl die Wellenlänge als auch die Polarisation eines Infrarotlichtimpulses zu beeinflussen. Es kann grundsätzlich jeder dem Fachmann allgemein bekannter optisch-parametrische Verstärker verwendet werden. Gängige optisch-parametrische Verstärkerkristalle, aus denen die optisch-parametrischen Verstärker hergestellt werden können, sind beispielsweise Lithiumniobat und Lithiumtantalat, Betabariumborat (BBO), Silberthiogolat (AgGaS₂), Kalium-Deuterium-Phosphat (KDP) und Kalium-Titanyl-Arsenat (KTA).

Die Eindringtiefe in die zu polymerisierenden Monomer- und/oder Oligomereinheiten ist grundsätzlich beliebig, hängt jedoch von den Eigenschaften der Monomer- und/oder Oligomereinheiten sowie der gebildeten Polymereinheiten ab. Absorbieren die Polymereinheiten das Infrarotlicht der verwendeten Wellenlänge gut, ist es nicht möglich, in tiefere Schichten von Monomer- und/oder Oligomereinheiten vorzudringen, sofern in einer höheren Schicht bereits Polymereinheiten gebildet wurden. Arbeitet man jedoch mit Polymereinheiten, die das Infrarotlicht der verwendeten Wellenlänge nicht absorbieren, ist es auch möglich, nach der Polymerisierung höher liegender Schichten noch in tiefer liegende Schichten von Monomer- und/oder Oligomereinheiten vorzudringen und dort Polymerisationsreaktionen auszulösen.

In einer Variante wird das Verfahren unter Einsatz geeigneter Fokussierlinsen durchgeführt, um den Infrarotlichtstrahl zusätzlich zu fokussieren. Dadurch lässt sich eine höhere räumliche Auflösung der durchzuführenden Polymerisationsreaktion erreichen. Berücksichtigt man zusätzlich die Tatsache, dass einzelne Photonen nicht ausreichend Energie enthalten, um die erwünschte Polymerisationsreaktion auszulösen, sondern das hierzu Multiphotonenprozesse erforderlich sind, erreicht man eine zusätzliche höhere räumliche Auflösung, die von den erforderlichen Iterationen, also der Anzahl der erforderlichen Photonen, abhängt. Denn erst wenn die notwendige Anzahl an Photonen auf ein und dieselbe Bindung gebracht werden konnte, kann diese Bindung brechen und für eine Polymerisationsreaktion zur Verfügung stehen.

In einer Variante wird das Verfahren derart ausgeführt, dass die Polymerisierung in einem örtlich begrenzten Raum erfolgt, der transversal kleiner als 10 µm, insbesondere kleiner als 5 µm, insbesondere kleiner als 2 µm und ganz besonders kleiner als 1 µm und longitudinal kleiner als 20 µm, insbesondere kleiner als 10 µm, insbesondere kleiner als 50 µm, insbesondere kleiner als 2 µm und insbesondere kleiner als 1,5 µm ist. Die Bezeichnungen "transversal" und "longitudinal" beziehen sich dabei auf die Ausbreitungsrichtung der Infrarotlichtimpulse.

Wenngleich das Verfahren mit Substanzen in einem beliebigen Aggregatzustand durchgeführt werden kann, erfolgt die Durchführung in einer Variante des Verfahrens in einem flüssigen System. Das heißt, die zu reagierenden Monomer- und/oder Polymereinheiten liegen entweder als flüssige Substanzen vor und/oder sind in einem flüssigen Lösungsmittel gelöst. Als Lösungsmittel können beispielsweise Alkohole wie Methanol, Ethanol, Propanol, Butanol und entsprechende Diole wie beispielsweise 1,2-Ethandiol und 1,4-Butandiol oder nicht alkoholische, organische Lösungsmittel wie etwa Tetrachlormethan oder wässrige Lösungsmittel verwendet werden.

In einer Variante des Verfahrens wird das Lösungsmittel sowohl hinsichtlich seiner chemischen Beschaffenheit als auch hinsichtlich seiner eingesetzten Menge dahingehend ausgewählt, dass es exotherme oder exergonische Polymerisationsreaktionen verlangsamen oder deren spontanen Ablauf gänzlich unterbinden kann. Dies kann beispielsweise dadurch bewerkstelligt werden, dass die gleiche Menge Lösungsmittel oder sogar zehnmal mal so viel Lösungsmittel wie zu reagierende Monomer- und/oder Oligomereinheiten eingesetzt werden. Diese Mengenangaben beziehen sich dabei auf Volumenanteile bezüglich des Lösungsmittels und auf Volumenanteile bezüglich der einzusetzenden Monomer- und/oder Oligomereinheiten, wenn diese im flüssigen Aggregatzustand vorliegen, oder auf oder Massenanteile bezüglich der einzusetzenden Monomer- und/oder Oligomereinheiten, wenn diese im festen Aggregatzustand vorliegen. Je größer die Menge des eingesetzten Lösungsmittels, desto geringer ist die Wahrscheinlichkeit, dass zwei Monomer- und/oder Oligomereinheiten aufeinander treffen, um miteinander im Rahmen einer Polymerisationsreaktion reagieren zu können. Ferner kommt es durch Erwärmung des Lösungsmittels zu einem Energieabzug aus den Monomer- und/oder Oligomereinheiten, so dass deren Weiterreaktion trotz eines grundsätzlich exothermen Vorgangs unterbunden oder zumindest verlangsamt werden kann.

In einer Variante des Verfahrens handelt es sich bei den zu polymerisierenden Monomer-und/oder Oligomereinheiten um Grundeinheiten eines Kunststoffes. Auf diese Weise ist es möglich, einen Kunststoff durch Polymerisation mittels Infrarotlichtimpulsen zu erzeugen, wobei der Kunststoff wahlweise mikrostrukturierte Bereich aufweisen kann. Dies lässt sich dadurch einstellen, wie die Infrarotlichtimpulse auf die zu polymerisierenden Monomer-und/oder Oligomereinheiten gelenkt werden, um eine örtlich begrenzte bzw. spezifizierte Polymerisierung zu erreichen. Geeignete herstellbare Kunststoffe sind beispielsweise Polyurethan (PU), Polyethylenterephthalat (PET), Polyvinylchlorid (PVC) oder Polypropylen (PP). Die entsprechenden zu polymerisierenden Grundeinheiten können folglich beispielsweise Isocyanate, Terephthalsäure, Ehtylenglykol, Vinylchlorid und Propen sein.

In einer Variante des Verfahrens wird es derart ausgeführt, dass bestimmte Bereiche des erzeugten Polymers einen höheren Polymerisationsgrad als andere Bereiche des Polymers haben. Dies kann einerseits - wie gerade angesprochen - durch das gezielte Lenken der Infrarotlichtimpulse auf bestimmte Bereiche einer Lösung oder Zusammensetzung der zu polymerisierenden Substanzen erreicht werden. Beispielsweise können bestimmte Bereiche länger mit Infrarotlichtimpulsen bestrahlt werden, so dass sich hier ein höherer Polymerisationsgrad einstellt. Andererseits kann diese Variante des Verfahrens auch dadurch bewerkstelligt werden, dass - wie oben erläutert - polarisierte Infrarotlichtimpulse eingesetzt werden, um spezifisch bestimmte Bindungen bzw. Bindungsrichtungen zur Reaktion anregen zu können, andere jedoch von einer Reaktion auszusparen.

In einer weiteren Variante des Verfahrens werden die beiden zuvor genannten Varianten miteinander kombiniert, so dass ein Kunststoff erzeugt wird, der mindestens einen elastischen und mindestens einen plastischen Bereich aufweist. Der elastische Bereich ist dabei ein Bereich mit einem geringeren Polymerisationsgrad, während der plastische Bereich ein Bereich innerhalb des Kunststoffes mit einem höheren Polymerisationsgrad ist. Beispielsweise kann durch das gezielte Einführen von Quervernetzungen eine höhere Plastizität von bestimmten Bereichen erreicht werden, während andere Kunststoffbereiche ihre elastischen Eigenschaften beibehalten. So lassen sich mikrostrukturierte Kunststoffe erzeugen, die individuell angepasste Eigenschaften aufweisen und folglich für die spezifischen Anforderungen der unterschiedlichsten Einsatzmöglichkeiten anpassbar sind.

Durch die Mikrostrukturierung ist es beispielsweise möglich, Beschriftungen in einen Kunststoff oder in ein anderes Polymer bzw. in Gegenstände einzubringen, die aus diesem Kunststoff oder anderem Polymer bestehen, ohne dabei zusätzlich eine Beschriftung auf den Kunststoff oder das Polymer aufbringen zu müssen. Dadurch lässt sich die Haltbarkeit derartiger Schriftzüge signifikant erhöhen und ihre Lebensdauer ebenso signifikant verlängern. Auch können mikrostrukturierte Kanäle in ein Polymer eingebracht werden, um das Polymer anschließend beispielsweise in der Mikrofluidtechnik einsetzen zu können.

In einer Verfahrensvariante weist das Polymer anisotrope Eigenschaften auf, die in einer ersten Richtung des Polymers um 50 % erhöht oder erniedrigt sind in Bezug auf die Eigenschaften in einer zweiten Richtung. Die zweite Richtung weicht dabei von der ersten Richtung insbesondere um wenigstens bzw. rund 10°, 30°, 45°, 60°, 75°oder 90°ab.

Die Aufgabe wird auch durch die Verwendung von Infrarotlichtimpulsen mit den Merkmalen des Anspruchs 14 gelöst. Demnach weisen die Infrarotlichtimpulse eine Wellenlänge von 2500 bis 20000 nm, eine Intensität von mehr als 10¹⁵ W/m², eine Dauer von mehr als 8 fs und weniger als 3 ps sowie eine im Wesentlichen lineare Polarisation auf und werden zur Polymerisierung von Monomer- und/oder Oligomereinheiten eingesetzt.

Bevorzugte Ausgestaltungen bzw. Varianten des erfindungsgemäßen Verfahrens sind in analoger Weise auch im Rahmen der erfindungsgemäß beanspruchten Verwendung einsetzbar.

Insbesondere eignet sich die Verwendung von Infrarotlichtimpulsen zur Polymerisierung zur Herstellung eines mikrostrukturierten Polymers. Auch diesbezüglich wird auf die obigen Ausführungen verwiesen.

Weitere Eigenschaften und Einzelheiten der vorliegenden Erfindung werden anhand der Figuren und eines Beispiels näher erläutert. Es zeigen:
- Fig. 1: die Strukturformel von Toluol-2,4-diisocyanat und
- Fig. 2: ein Beispiel für ein strukturiertes Polymer.

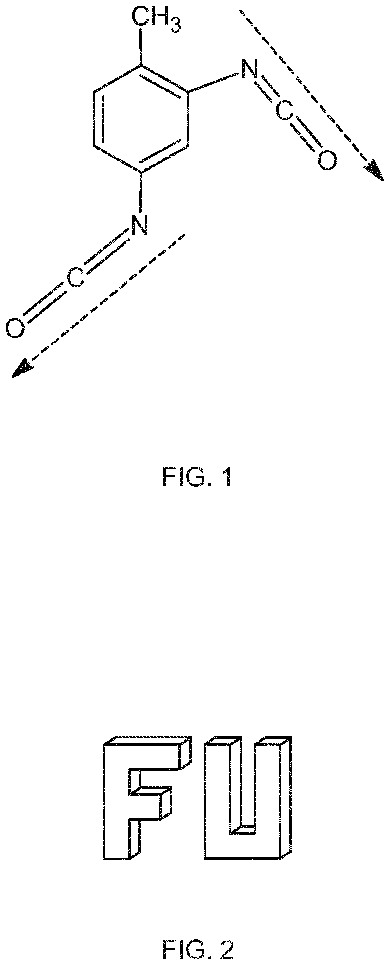

Die Figuren 1 und 2 werden im Zusammenhang mit dem nachfolgenden Beispiel näher erläutert.

### Beispiel: Polymerisierung von Toluol-2,4-diisocyanat (TDI)

100 µl TDI als zur polymerisierende Monomereinheit werden mit 1 ml wasserfreiem 1,4-Butandiol als Lösungsmittel und Reaktionspartner gemischt, so dass sich ein Verhältnis von 10 zu 1 (bezogen auf das jeweils eingesetzte Volumen der Substanzen) zwischen Lösungsmittel und zu polymerisierenden Monomereinheiten ergibt. Auf diese Weise wird erreicht, dass sämtliche TDI-Moleküle auch tatsächlich mit dem 1,4-Butandiol reagieren können, so dass nach Abschluss der Polymerisierungsreaktion kein unreagiertes TDI mehr vorhanden ist. Da TDI hochgiftig ist, ist die Anwesenheit von Monomeren im gebildeten Polymer unerwünscht.

Um Diffusionseffekte in der angesetzten Lösung möglichst gering zu halten, wird nur ein Teil der Lösung auf einen Objektträger aufgetragen und nachfolgend den Infrarotlichtimpulsen zur Auslösung der Polymerisationsreaktion ausgesetzt.

Es wird ein Laser mit einer Intensität von 1,8 x 10⁻¹⁵ W/m² verwendet. Die Ausgangsfrequenz des Lasers liegt bei 2280 cm⁻¹. Jeder Laserimpuls hat eine Dauer von 500 fs und überstreicht einen spektralen Bereich von 100 cm⁻¹ (das heißt, er hat eine Halbwertsbreite von 100 cm⁻¹). Die eingesetzten Laserpulse sind negativ linear gechirpt, so dass sich ihre Frequenz von initial 2280 cm⁻¹ auf 2180 cm⁻¹ während der Pulsdauer von 500 fs kontinuierlich verringert. Das vom Infrarotlaser ausgesandte Licht ist zudem linear polarisiert. Die Repetitionsrate des Lasers beträgt 100 kHz, der Fokus beträgt 20 µm.

Die Strukturformel von TDI ist in der Figur 1 dargestellt. Die Pfeile neben den Isocyanatgruppen des TDI geben die Schwingungsübergangsdipolmomentvektoren der beiden Isocyanatgruppen an. Da diese Schwingungsübergangsdipolmomentvektoren um 90° zueinander versetzt sind, kann durch den Einsatz von polarisiertem Licht gezielt nur eine der beiden Isocyanatgruppen pro Molekül zur Reaktion angeregt werden.

Ein mögliches Reaktionsschema ist folgendes: Durch Anregung der Isocyanatgruppen mit den Infrarotlichtimpulsen kommt es zum Bruch der Doppelbindungen zwischen dem Stickstoffatom bzw. dem Kohlenstoffatom sowie zwischen dem Kohlenstoffatom und dem Sauerstoffatom. Durch die Reaktion mit einer Hydroxygruppe des 1,4-Butandiols kommt es anschließend zu einer Protonierung des Stickstoffatoms und zur Ausbildung einer zusätzlichen Kohlenstoff-Sauerstoff-Verbindung sowie zu einer Wiederausbildung der Doppelbindung zwischen dem Kohlenstoffatom und dem Sauerstoffatom. Im Ergebnis bildet sich also eine Urethangruppe (-NH-CO-O-). Durch die Difunktionalität des TDI und des 1,4-Butandiols können so lineare Polyurethane gebildet werden.

Um einen 100 µm langen, ca. 1,5 µm breiten und ca. 3 µm tiefen Quader aus Polyurethan zu bilden, sind 60 Laserimpulse unter gleichzeitiger Probenverschiebung erforderlich. Somit lässt sich durch 3600 Wiederholungen ein Quader mit einer Kantenlänge von 100 µm x 100 µm x 3 µm erzeugen.

Neben einfachen quaderförmigen Polymerstrukturen wie zuvor beschrieben ist es auch möglich, mikrostrukturierte Polymere beziehungsweise Mikrostrukturen innerhalb eines Polymers zu erzeugen. Beispielsweise lässt sich in einer Abwandlung des Beispiels der Schriftzug "FU" als Polymer darstellen, wie dies in der Figur 2 dargestellt ist.

## Patentansprüche

1. Verfahren zur Polymerisierung von Monomer- und/oder Oligomereinheiten,
**dadurch gekennzeichnet,**
**dass** die zur Polymerisierung benötigte Energie durch Infrarotlichtimpulse in die zu polymerisierenden Monomer- und/oder Oligomereinheiten eingebracht wird, wobei die Infrarotlichtimpulse
- eine Wellenlänge von 2500 bis 20000 nm,
- eine Intensität von mehr als 10¹⁴ W/m²,
- eine Dauer von mehr als 8 fs und weniger als 3 ps und
- eine im Wesentlichen lineare Polarisation
aufweisen.

2. Verfahren gemäß Anspruch 1, **dadurch gekennzeichnet, dass** die Infrarotlichtimpulse zusätzlich einen negativen Chirp aufweisen.

3. Verfahren gemäß Anspruch 1 oder 2, **dadurch gekennzeichnet, dass** jeder Infrarotlichtimpuls einen spektralen Bereich von 2 bis 1000 cm⁻¹ überstreicht.

4. Verfahren nach einem der vorhergehenden Ansprüche, **dadurch gekennzeichnet, dass** die Repetitionsrate der Infrarotlichtimpulse zwischen 0,5 kHz und 200 MHz liegt.

5. Verfahren nach einem der vorherigen Ansprüche, **dadurch gekennzeichnet, dass** mehrere überlagerte Infrarotlichtimpulse verwendet werden, die sich jeweils voneinander in mindestens einem Parameter, insbesondere hinsichtlich ihres Spektralbereichs und/oder hinsichtlich ihrer Polarisation, unterscheiden.

6. Verfahren nach Anspruch 5, **dadurch gekennzeichnet, dass** die Überlagerung der Infrarotlichtimpulse durch mindestens einen optisch-parametrischen Verstärker erfolgt.

7. Verfahren gemäß einem der vorherigen Ansprüche, **dadurch gekennzeichnet, dass** die Polymerisierung in einem örtlich begrenzten Raum erfolgt, der - bezogen auf die Ausbreitungsrichtung der Infrarotlichtimpulse - transversal kleiner als 10 µm und longitudinal kleiner als 20 µm ist.

8. Verfahren nach einem der vorhergehenden Ansprüche, **dadurch gekennzeichnet, dass** die Polymerisierung in einem Lösungsmittel erfolgt.

9. Verfahren nach Anspruch 8, **dadurch gekennzeichnet, dass** eine aus energetischen Gesichtspunkten nach Bereitstellung der benötigten Aktivierungsenergie spontan ablaufende Polymerisationsreaktion durch einen Einsatz des Lösungsmittels in einem Verhältnis von 1:1 (v/m) bis 10:1 (v/m) zu den zu polymerisierenden Monomer- und/oder Oligomereinheiten derart beeinflusst wird, dass die Polymerisationsreaktion zumindest verlangsamt wird.

10. Verfahren nach einem der vorhergehenden Ansprüche, **dadurch gekennzeichnet, dass** die zu polymerisierenden Monomer- und/oder Oligomereinheiten Grundeinheiten eines Kunststoffs sind.

11. Verfahren nach einem der vorhergehenden Ansprüche, **dadurch gekennzeichnet, dass** das Verfahren derart ausgeführt wird, dass bestimmte Bereiche des erzeugten Polymers einen höheren Polymerisationsgrad als andere Bereiche des Polymers aufweisen.

12. Verfahren nach Anspruch 10 und 11, **dadurch gekennzeichnet, dass** das Verfahren derart ausgeführt wird, dass ein Kunststoff erzeugt wird, der mindestens einen elastischen und mindestens einen plastischen Bereich aufweist.

13. Verfahren nach einem der vorhergehenden Ansprüche, **dadurch gekennzeichnet, dass** das Polymer anisotrope Eigenschaften aufweist, die in einer ersten Richtung des Polymers um 50 % erhöht oder erniedrigt sind in Bezug auf die Eigenschaften in einer zweiten Richtung.

14. Verwendung von Infrarotlichtimpulsen mit einer Wellenlänge von 2500 bis 20000 nm, einer Intensität von mehr als 10¹⁵ W/m², einer Dauer von mehr als 8 fs und weniger als 3 ps sowie einer im Wesentlichen linearen Polarisation zur Polymerisierung von Monomer- und/oder Oligomereinheiten.

15. Verwendung nach Anspruch 14 zur Herstellung eines mikrostrukturierten Polymers.

## Claims

1. Method for polymerizing monomer units and/or oligomer units,
**characterized**
**in that** the energy required for polymerization is introduced into the monomer units and/or oligomer units to be polymerized by means of infrared light pulses, wherein the infrared light pulses have
- a wavelength of 2500 to 20000 nm,
- an intensity of more than 10¹⁴ W/m²,
- a duration of more than 8 fs and less than 3 ps and
- a substantially linear polarization.

2. Method according to Claim 1, **characterized in that** the infrared light pulses additionally have a negative chirp.

3. Method according to Claim 1 or 2, **characterized in that** each infrared light pulse sweeps over a spectral range of 2 to 1000 cm⁻¹.

4. Method according to any of the preceding claims, **characterized in that** the repetition rate of the infrared light pulses lies between 0.5 kHz and 200 MHz.

5. Method according to any of the preceding claims, **characterized in that** multiple superposed infrared light pulses are being used, which differ from each other in each case in at least one parameter, particularly regarding their spectral ranges and/or regarding their polarization.

6. Method according to Claim 5, **characterized in that** the superposition of the infrared light pulses takes place by means of at least one optical parametric amplifier.

7. Method according to any of the preceding claims, **characterized in that** the polymerization takes place in a localized space which - referring to the propagation direction of the infrared light pulses - is transversely smaller than 10 µm and longitudinally smaller than 20 µm.

8. Method according to any of the preceding claims, **characterized in that** the polymerization takes place in a solvent.

9. Method according to Claim 8, **characterized in that** a polymerization reaction, taking place spontaneously, with respect to energy, after the required activation energy is provided, is influenced by application of a solvent at a ratio of 1:1 (v/m) to 10:1 (v/m) to the monomer units and/or oligomer units to be polymerized in such a way that the polymerization reaction is at the least slowed down.

10. Method according to any of the preceding claims, **characterized in that** the monomer units and/or oligomer units to be polymerized are basic units of a plastic material.

11. Method according to any of the preceding claims, **characterized in that** the method is executed in such a way that specific areas of the produced polymer have a higher degree of polymerization than other areas of the polymer.

12. Method according to Claim 10 and 11, **characterized in that** the method is executed in such a way that a plastic material is produced which has at least an elastic area and at least a plastic area.

13. Method according to any of the preceding claims, **characterized in that** the polymer has anisotropic properties which in a first direction of the polymer are 50 % higher or lower than the properties in a second direction.

14. Use of infrared light pulses having a wavelength of 2500 to 20000 nm, an intensity of more than 10¹⁵ W/m², a duration of more than 8 fs and less than 3 ps as well as a substantially linear polarization for polymerizing monomer units and/or oligomer units.

15. Use according to Claim 14 for producing a micro-structured polymer.

## Revendications

1. Procédé de polymérisation d'unités monomères et/ou oligomères,
**caractérisé en ce que**
l'énergie nécessaire à la polymérisation est introduite par des impulsions de lumière infrarouge dans les unités monomères et/ou oligomères à polymériser, les impulsions de lumière infrarouge présentant
- une longueur d'onde de 2 500 à 20 000 nm,
- une intensité supérieure à 10¹⁴ W/m²,
- une durée supérieure à 8 fs et inférieure à 3 ps et
- une polarisation essentiellement linéaire.

2. Procédé selon la revendication 1, **caractérisé en ce que** les impulsions de lumière infrarouge présentent en plus une fluctuation négative de fréquence d'impulsion.

3. Procédé selon la revendication 1 ou 2, **caractérisé en ce que** chaque impulsion de lumière infrarouge balaye une plage spectrale de 2 à 1 000 cm⁻¹.

4. Procédé selon l'une quelconque des revendications précédentes, **caractérisé en ce que** le taux de répétition des impulsions de lumière infrarouge se situe entre 0,5 kHz et 200 MHz.

5. Procédé selon l'une quelconque des revendications précédentes, **caractérisé en ce que** plusieurs impulsions de lumière infrarouge superposées sont utilisées, qui se distinguent les unes des autres dans au moins un paramètre, en particulier en ce qui concerne leur plage spectrale et/ou leur polarisation.

6. Procédé selon la revendication 5, **caractérisé en ce que** la superposition des impulsions de lumière infrarouge est effectuée par au moins un amplificateur paramétrique optique.

7. Procédé selon l'une quelconque des revendications précédentes, **caractérisé en ce que** la polymérisation s'effectue dans une espace localement limité qui - rapporté à la direction de propagation des impulsions de lumière infrarouge - est transversalement inférieur à 10 µm et longitudinalement inférieur à 20 µm.

8. Procédé selon l'une quelconque des revendications précédentes, **caractérisé en ce que** la polymérisation s'effectue dans un solvant.

9. Procédé selon la revendication 8, **caractérisé en ce qu'**une réaction de polymérisation se déroulant spontanément selon des points de vue énergétiques après la fourniture de l'énergie d'activation requise est influencée par une mise en oeuvre du solvant selon un rapport de 1:1 (v/m) à 10:1 (v/m) aux unités monomères et/ou oligomères à polymériser de telle sorte que la réaction de polymérisation est au moins ralentie.

10. Procédé selon l'une quelconque des revendications précédentes, **caractérisé en ce que** les unités monomères et/ou oligomères à polymériser sont des unités de base d'une matière plastique.

11. Procédé selon l'une quelconque des revendications précédentes, **caractérisé en ce que** le procédé est réalisé de telle sorte que certaines zones du polymère produit présentent un degré de polymérisation plus élevé que d'autres zones du polymère.

12. Procédé selon les revendications 10 et 11, **caractérisé en ce que** le procédé est réalisé de telle sorte qu'il est produit une matière plastique qui présente au moins une zone élastique et au moins une zone plastique.

13. Procédé selon l'une quelconque des revendications précédentes, **caractérisé en ce que** le polymère présente des propriétés anisotropes qui, dans une première direction du polymère, sont augmentées ou réduites de 50 % par rapport aux propriétés dans une deuxième direction.

14. Utilisation d'impulsions de lumière infrarouge ayant une longueur d'onde de 2 500 à 20 000 nm, une intensité supérieure à 10¹⁵ W/m², une durée supérieure à 8 fs et inférieure à 3 ps ainsi qu'une polarisation essentiellement linéaire pour la polymérisation d'unités monomères et/ou oligomères.

15. Utilisation selon la revendication 14 pour la fabrication d'un polymère microstructuré.
